# EUROPEAN PATENT SPECIFICATION

(11) **EP 3 121 643 B1**
(45) Date of publication and mention of the grant of the patent: **22.07.2020**
(21) Application number: 14886147.9
(22) Date of filing: 19.03.2014
(51) Int. Cl.: G02C 7/02, C09B 35/24, G02C 7/04

(54) **OPHTHALMIC LENS**
BRILLENGLAS
LENTILLE OPHTALMIQUE

(43) Date of publication of application: 25.01.2017
(73) Proprietor: Menicon Co., Ltd., Nagoya-shi, Aichi 460-0006 (JP); Dainichiseika Color & Chemicals Mfg. Co., Ltd., Chuo-ku Tokyo 103-8383 (JP)
(72) Inventor: MATSUSHITA, Ryo, Kasugai-shi, Aichi 487-0032 (JP); GOTO, Yuji, Kasugai-shi, Aichi 487-0032 (JP); WATANABE, Tsuyoshi, Kasugai-shi Aichi 487-0032 (JP); KONO, Hisao, Tokyo 103-8383 (JP); HIRATA, Naoki, Tokyo 103-8383 (JP)
(74) Representative: Mewburn Ellis LLP
(86) International application number: PCT/JP2014/057595
(87) International publication number: WO 2015/140967

(56) References cited:
- WO-A1-2009/044853
- WO-A1-2009/157536
- WO-A1-2012/057096
- JP-A- H0 429 154
- JP-A- 2007 507 758
- JP-A- 2009 091 401

## Description

### TECHNICAL FIELD

The present invention relates to an ophthalmic lens, and more particularly to a colored ophthalmic lens.

### BACKGROUND ART

Recently, with respect to various ophthalmic lenses such as contact lenses, a demand for products which are colored entirely or partially tends to increase.

A colored ophthalmic lens is produced by various methods. For example, a method in which a coloring agent is used in a polymerization phase of a lens polymer is widely known. More particularly, the method of producing contact lenses comprises the steps of: adding a coloring agent such as a polymerizable colorant or a polymeric colorant into a polymerizable composition to form a lens polymer; polymerizing the polymerizable composition containing the coloring agent; and processing the obtained polymer as necessary. The ophthalmic lens obtained by the above method does not suffer from decoloration or discoloration caused by elution of the coloring agent. Furthermore, the ophthalmic lens is also excellent in durability or resistance with respect to light and chemicals.

As a method of coloring an ophthalmic lens not entirely but partially, a coloring method including the following steps is well known: preparing an ink composition which contains a predetermined coloring agent; and depositing the ink composition on the surface of the ophthalmic lens by a printing method such as screen printing or ink-jet printing, so that the ink composition permeates into the lens.

Under these circumstances, Patent Document 1 (JP2010-97225A1) discloses a novel coloring agent for an ophthalmic lens, wherein a polymerizable functional group consists of an azoic dye. Further, Patent document 2 (WO2009/044853A1) discloses a method of producing an ophthalmic lens, wherein a mixed composition of an azoic dye and a dimethylpolysiloxane which are polymerized in advance is added to a polymerizable composition forming a lens polymer, and the polymerizable composition is polymerized. Further, Patent document 3 (WO2012/057096) discloses an azo colorant being superior in elution resistance from an ophthalmic lens material and miscibility monomer for an ophthalmic lens, and capable of coloring with various hues.

Various polymerizable colorants and polymeric colorants are disclosed also in documents other than the patent documents identified above. Many of those conventional polymerizable colorants and polymeric colorants have an effectively reduced degree of elution out of the lens, and permit production of contact lenses which are excellent in durability with respect to light and chemicals.

However, many of the conventional polymerizable colorants are inferior in preservation stability due to the polymerizable groups contained within their molecules. Furthermore, the polymerizable colorants require the step of adding the polymerizable groups during the production process, giving rise to an inherent problem of complication of the process. On the other hand, the polymeric colorants, which are formed by polymerizing a polymerizable or non-polymerizable colorant with a high molecular substance in advance, have an inherent problem of complication of the process, like the above-described polymerizable colorants. In addition, increasing the molecular weight of the colorant has a risk of causing reduction of molar absorbance of the colorant, so that it is unavoidably required to increase the amount of use of high molecular colorant, to permit the desired coloring of the ophthalmic lens, resulting in a harmful influence on the physical property of the ophthalmic lens. Furthermore, the conventional polymeric colorant is difficult to permeate into the lens polymer due to its molecular size. Thus, it has a problem that an ink composition formed by such a colorant may not permeate into the contact lens even though the ink composition is deposited on the surface of the ophthalmic lens by ink-jet printing.

### PRIOR ART DOCUMENTS

### PATENT DOCUMENTS

Patent Document 1: JP 2010-97225 A1
Patent Document 2: WO 2009/044853 A1
Patent Document 3: WO 2012/057096 A1

### SUMMARY OF THE INVENTION

### TECHNICAL PROBLEM

The present invention was made in view of the circumstances described above. Therefore, it is an object of the present invention to provide an ophthalmic lens wherein the elution of the coloring agent is effectively reduced.

### SOLUTION TO PROBLEM

To solve the problem indicated above, the present invention provides in a first aspect a silicone hydrogel ophthalmic lens according to claim 1 and in a second aspect a method of producing a silicone hydrogel ophthalmic lens according to claim 4.

In a first preferred form of the ophthalmic lens according to the invention, the ophthalmic lens is formed of a polymer of a polymerizable composition comprising the above-described coloring agent and at least one kind of polymerizable compound.

In a second preferred form of the ophthalmic lens according to the invention, the ophthalmic lens is formed by coloring a lens precursor with an ink composition containing the above-described coloring agent, the lens precursor being formed of a polymer of a polymerizable composition comprising at least one kind of polymerizable compound.

### ADVANTAGEOUS EFFECTS OF THE INVENTION

As described above, the ophthalmic lens according to the invention includes the coloring agent with a specific structure. Accordingly, the ophthalmic lens obtained by polymerizing a polymerizable composition including the above-described coloring agent and the ophthalmic lens colored with the ink composition including the above-described coloring agent, for example, do not suffer from elution of the coloring agent due to the structure of the coloring agent.

Furthermore, on the contrary to the conventional polymerizable colorant and polymeric colorant, the coloring agent used in the invention does not require any kind of special operation such as providing a polymeric base or increasing the molecular weight of the colorant. Therefore, the ophthalmic lens according to the invention can be produced comparatively more simply than in the case of the production of an ophthalmic lens by using a conventional polymerizable colorant.

### MODE FOR CARRYING OUT THE INVENTION

The ophthalmic lens according to the invention comprises a compound represented by the following general formula (I) as a coloring agent. Employing the compound having a specific structure as the coloring agent makes it possible to effectively reduce elution of the coloring agent from the ophthalmic lens according to the invention. Meanwhile, in the following description, "ophthalmic lens" means not only an ophthalmic lens as an end product but also an ophthalmic lens after polymerization and yet to be subjected to a hydration treatment or a surface treatment. The ophthalmic lens after polymerization and yet to be subjected to a hydration treatment or a surface treatment is referred to as an "ophthalmic lens precursor".

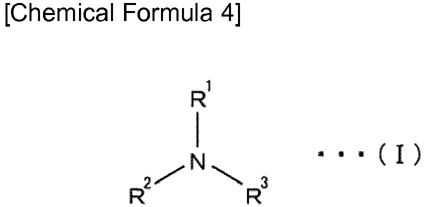

In the above formula (I), each of R¹, R² and R³ is independent from each other, and represented by a hydrogen atom, a substituted or unsubstituted aromatic residue, or an atomic group of the following formula (II). At least one of R¹, R² and R³ is an atomic group represented by the following formula (II).

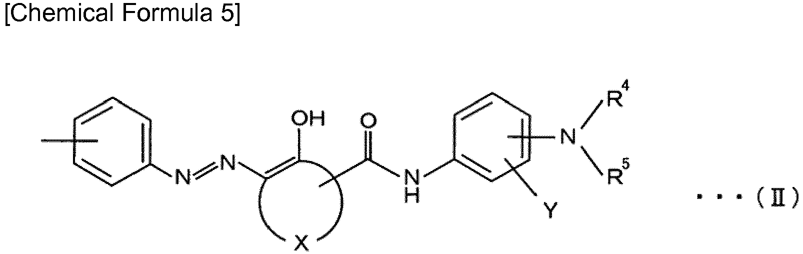

In the above formula (II), each of R⁴ and R⁵ is independent from each other, and represented by a hydrogen atom, a formyl group, a 1-20C acyl group, a methacryloyl group, an acryloyl group, or an atomic group of the following formula (III). X is a substituted or unsubstituted naphthalene ring or a benzocarbazole ring. Y is a hydrogen atom, a halogen atom or a 1-5C alkoxy group.

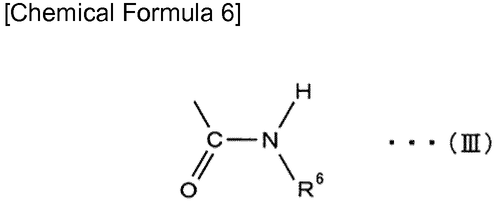

In the above formula (III), R⁶ is a 1-20C aliphatic hydrocarbon or alicyclic hydrocarbon, a 6-20C aromatic hydrocarbon, a methacryloyloxyalkyl group, or an acryloyloxyalkyl group.

The coloring agent having the above-described structure, which is used for the ophthalmic lens of the invention, can be produced by conventionally known methods. For example, the coloring agent used in the invention is synthesized according to the following method.

First, a nitro group included in a predetermined nitro group-containing compound (starting material) is deoxidized according to a conventionally known method, and the obtained deoxidized substance is subjected to a reaction with an acid anhydride, an acid chloride or a monoisosyanate to form a coupler.

Examples of the nitro group-containing compound used as the starting material include N-nitrophenyl-hydroxy-naphtoamide analogues such as 3-hydroxy-3'-nitro-2-naphtoanilid (customarily called naphthol AS-BS), 3-hydroxy-7-methoxy-N-(3-nitrophenyl) naphtoamide, 6-hydroxy-N-(3-nitrophenyl) naphtoamide, 1-hydroxy-N-(3-nitrophenyl) naphtoamide, 6-hydroxy-N-(2-nitrophenyl)-2-naphtoamide. Deoxidization of N-nitrophenyl-hydroxy-naphtoamide analogues can be performed, for example, by reacting a N-nitrophenyl-hydroxy-naphtoamide analogue with a concentrated hydrochloric acid in the presence of an iron catalyst.

Further, examples of the acid anhydride to be brought into reaction with the nitro group-containing compound (starting material) include acetic anhydride, propionic anhydride, butyric anhydride and isobutyric anhydride. Furthermore, examples of the acid chloride to be brought into reaction with the deoxidized substance of the starting material include a compound represented by the formula: RCOCI (wherein R is a 2-17C alkyl group), more specifically, propionyl chloride, valeryl chloride and stearic acid chloride; and further include o-toluic acid chloride and m-toluic acid chloride, for example. In addition, examples of the monoisocyanate to be brought into reaction with the deoxidized substance of the starting material include methylisocyanate, n-butylisocyanate, octadecylisocyanate, cyclohexylisocyanate and phenyl isocyanate.

While preparing the coupler as stated above, a predetermined amine is brought into reaction with a nitrite in an acidic aqueous solution (a hydrochloric acid, for example) so as to form a diazonium salt. Examples of the amine used here include 4,4'-diaminodiphenylamine, 4,4'-diaminotriphenylamine, 4-aminodiphenylamine, 4',4"-triaminotriphenylamine.

The desired coloring agent can be thus obtained by reacting the obtained coupler with the diazonium salt.

Examples of the coloring agent used in the ink composition for a water-absorptive contact lens according to the invention includes the compounds represented by the following structural formulae (b) to (d). Structural formulae (a) and (e) to (o) provide comparative example compounds.

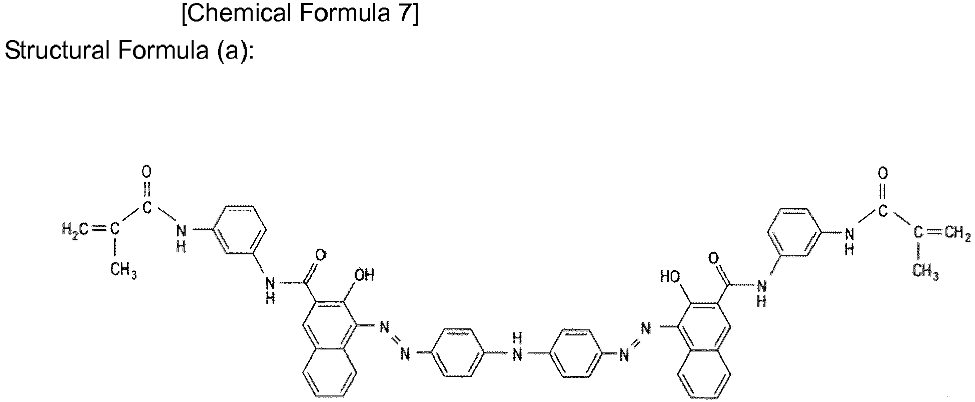

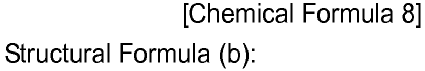

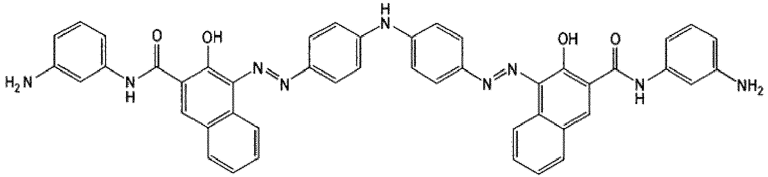

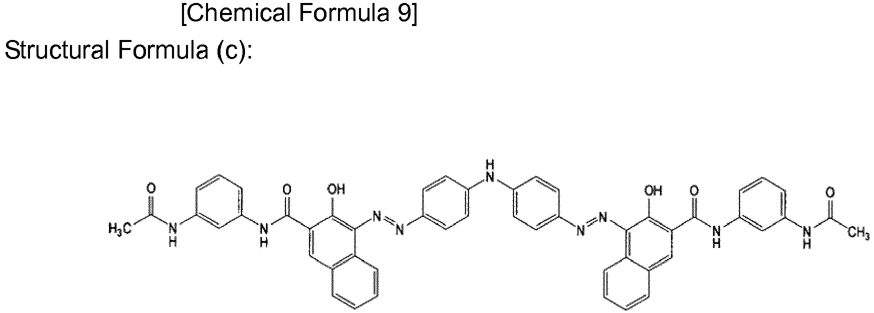

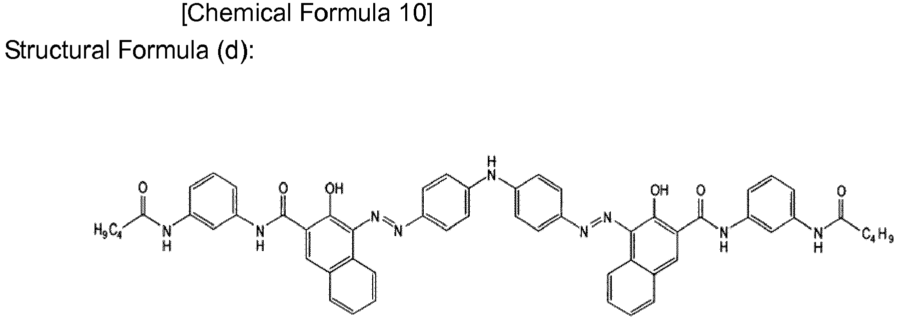

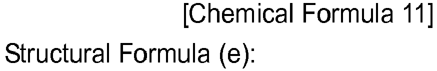

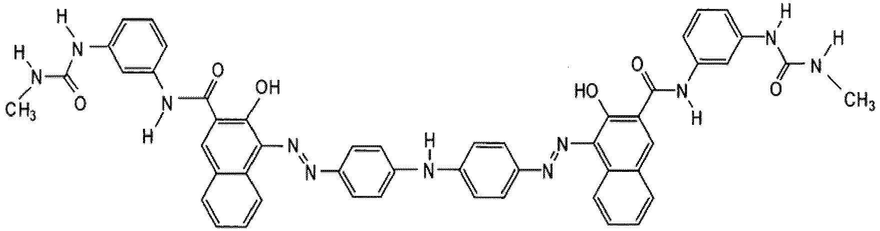

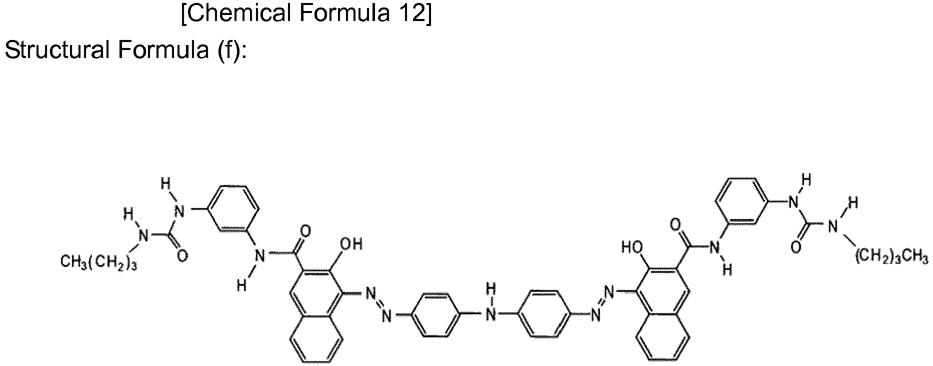

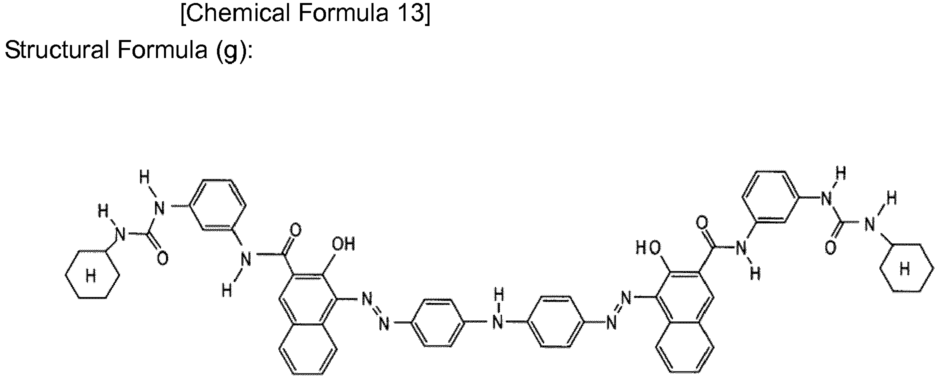

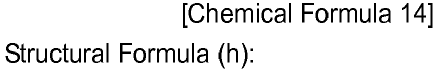

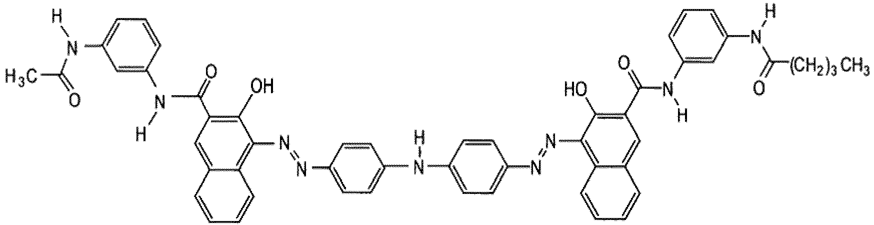

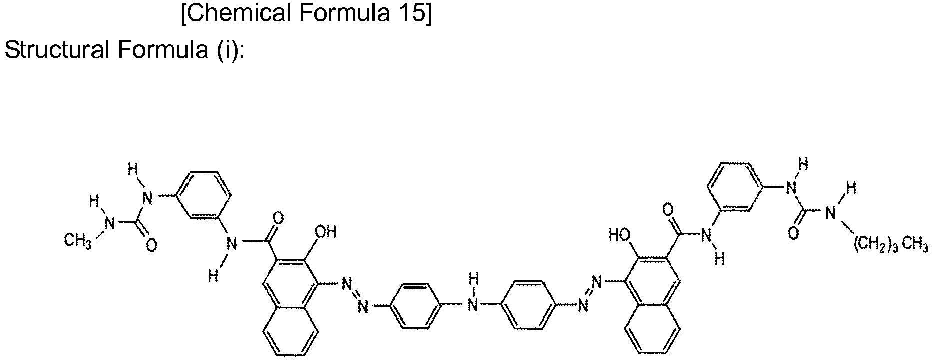

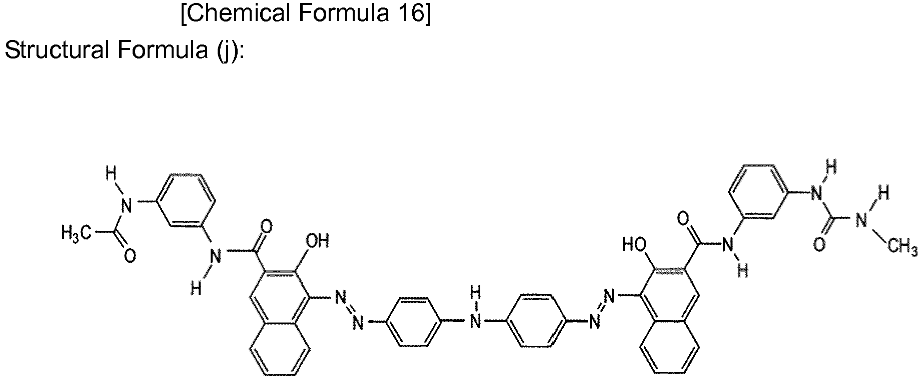

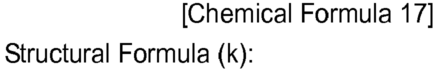

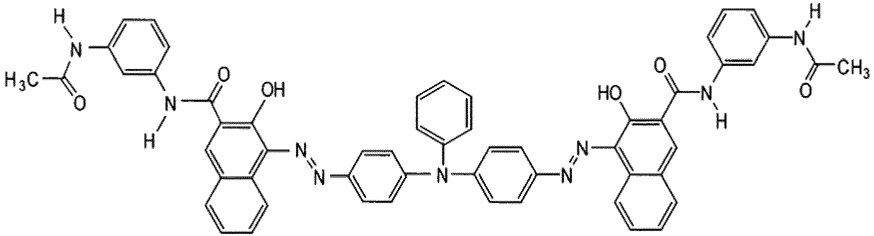

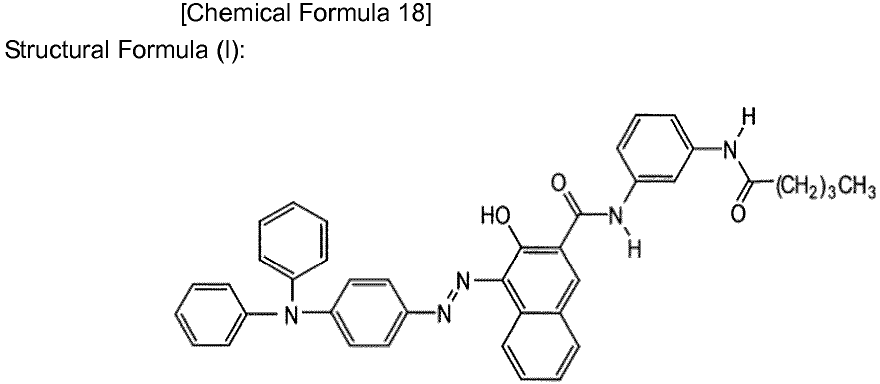

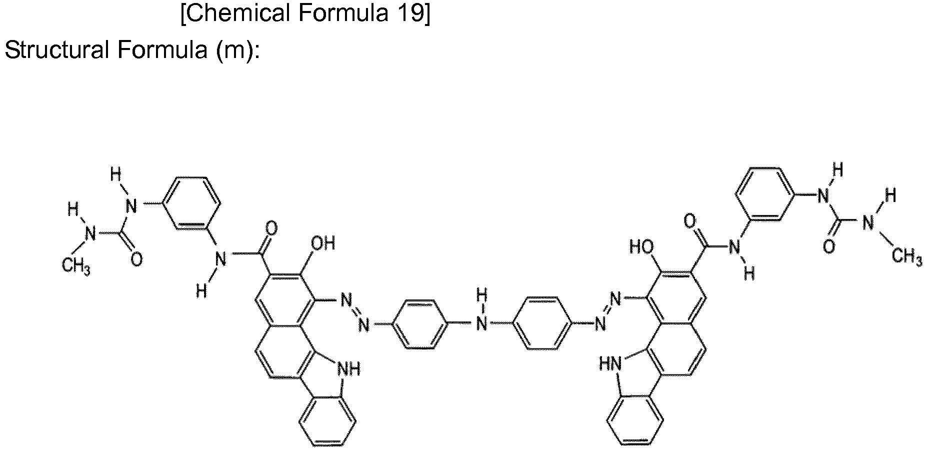

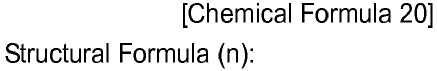

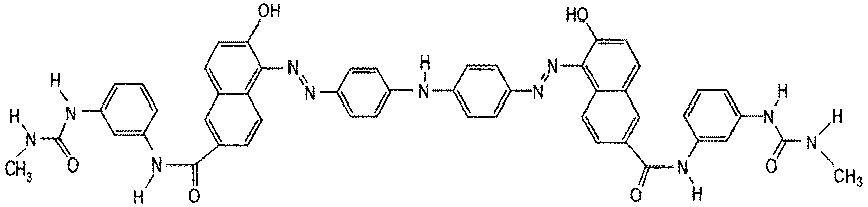

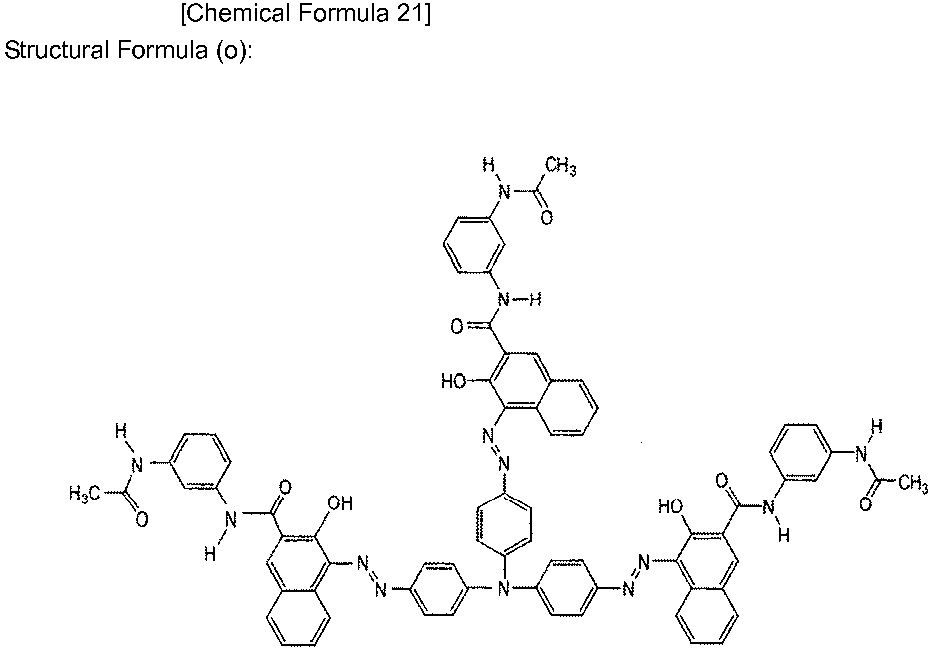

Meanwhile, the ophthalmic lens according to the invention includes above-described predetermined coloring agent, which ophthalmic lens can be produced according to various known methods. For example, the ophthalmic lens according to the invention can be advantageously produced according to a method described below in detail.

### A. A production method using a polymerizable composition comprising a coloring agent

In this method, a desired ophthalmic lens is produced by polymerizing a coloring agent and a polymerizable composition which comprises at least one polymerizable compound, and then performing a hydration treatment or a surface treatment as necessary.

In the above method, the polymerizable composition is prepared first. Components used in preparation of the polymerizable composition are suitably selected from various components which are conventionally used in the production of ophthalmic lenses, according to the kind of the desired ophthalmic lens. Examples of the components used in preparation of the polymerizable composition include a hydrophobic monomer, a hydrophilic monomer and a cross-linking agent.

More specifically, as the hydrophobic monomer, it is possible to use, for example, a silicon-containing monomer and a fluorine-containing alkyl (meth)acrylate, which are conventionally used for the ophthalmic lens material. The silicon-containing monomer advantageously improves the oxygen permeability of the ophthalmic lens. On the other hand, the fluorine-containing alkyl (meth)acrylate improves solubility of oxygen into the lens (polymer), which solubility is one of factors that influence the oxygen permeability of the ophthalmic lens. Further, the fluorine-containing alkyl (meth)acrylate reduces adhesiveness (tackiness) of lens surfaces, and effectively prevents adhesion of lipid to the lens surfaces, owing to its hydrophobic and lipophobic properties, to improve the anti-stain property of the lens. It is to be understood that the expression "...(meth)acrylate" is used in this specification as a generic expression including "... acrylate" and "... methacrylate".

As the silicon-containing monomer described above, specifically, a silicon-containing monomer having an ethylenic unsaturated group and a polydimethylsiloxane structure via an urethane bond is advantageously used. In addition, together with or instead of the silicon-containing monomer described above, generally used silicon-containing monomers can be used in the invention. The generally used silicon-containing monomers include siloxanyl (meth)acrylate and siloxanyl styrene wherein a pentamethyl disiloxymethyl group, a bis(trimethylsiloxy) (methyl)silylmethyl group, a bis(trimethylsiloxy) (methyl)silylpropyl group, a tris(trimethylsiloxy) silylmethyl group or a tris(trimethylsiloxy) silylpropyl group is introduced into (meth)acrylate or styrene. Among the above-indicated generally used silicon-containing monomers, bis(trimethylsiloxy) (methyl)silylpropyl (meth)acrylate and tris(trimethylsiloxy) silylpropyl (meth)acrylate are particularly preferably used in view of ease of purification, oxygen permeability, availability, compatibility, etc.

Examples of the fluorine-containing alkyl (meth)acrylate include 2,2,2-trifluoroethyl (meth)acrylate, 2,2,3,3,3-pentafluoropropyl (meth)acrylate, (perfluorobutyl)ethyl (meth)acrylate, (perfluorohexyl)ethyl (meth)acrylate, (perfluorooctyl)ethyl (meth)acrylate, (perfluorodecyl)ethyl (meth)acrylate and (perfluorododecyl)ethyl (meth)acrylate. Among the above-indicated fluorine-containing alkyl (meth)acrylates, one having a fluorinated portion of a large molecular weight is more preferably employed, since such a fluorine-containing alkyl (meth)acrylate is suitable to achieve more excellent oxygen permeability, and gives an adequate degree of flexibility or softness to the lens. Examples of the fluorine-containing alkyl (meth)acrylate having the fluorinated portion of a large molecular weight include (perfluorohexyl)ethyl (meth)acrylate, (perfluorooctyl)ethyl (meth)acrylate and (perfluorodecyl)ethyl (meth)acrylate. Among the above-indicated fluorine-containing alkyl (meth)acrylates, (perfluorooctyl)ethyl (meth)acrylate is most preferable, since it is commercially available and can be easily purified by distillation under a reduced pressure, for example.

On the other hand, examples of the hydrophilic monomer include: N-vinylpyrrolidone (NVP); acrylamide-based monomers such as acrylamide, N,N-dimethylacrylamide (DMAA), N,N-diethylacrylamide, N,N-dimethylaminopropylacrylamide, N-isopropylacrylamide and acryloylmorpholine; hydroxyalkyl acrylates such as 2-hydroxyethyl acrylate, hydroxypropyl acrylate and hydroxybutyl acrylate; (alkyl)aminoalkyl acrylates such as 2-dimethylaminoethyl acrylate and 2-butylaminoethyl acrylate; alkylene glycol monoacrylates such as ethylene glycol monoacrylate and propylene glycol monoacrylate; polyalkylene glycol monoacrylates such as polyethylene glycol monoacrylate and polypropylene glycol monoacrylate; ethylene glycol allyl ether; ethylene glycol vinyl ether; acrylic acid; aminostyrene; hydroxystyrene; vinyl acetate; glycidyl acrylate; allylglycidylether; vinyl propionate; N-vinyl lactams such as N-vinyl-3-methyl-2-pyrrolidone, N-vinyl-4-methyl-2-pyrrolidone, N-vinyl-5-methyl-2-pyrrolidone, N-vinyl-6-methyl-2-pyrrolidone, N-vinyl-3-ethyl-2-pyrrol idone, N-vinyl-4,5-d imethyl-2-pyrrol idone, N-vinyl-5,5-dimethyl-2-pyrrolidone, N-vinyl-3,3,5-trimethyl-2-pyrrolidone, N-vinyl-2-piperidone, N-vinyl-3-methyl-2-piperidone, N-vinyl-4-methyl-2-piperidone, N-vinyl-5-methyl-2-piperidone, N-vinyl-6-methyl-2-piperidone, N-vinyl-6-ethyl-2-piperidone, N-vinyl-3,5-dimethyl-2-piperidone, N-vinyl-4,4-dimethyl-2-piperidone, N-vinyl-2-caprolactam, N-vinyl-3-methyl-2-caprolactam, N-vinyl-4-methyl-2-caprolactam, N-vinyl-7-methyl-2-caprolactam, N-vinyl-7-ethyl-2-caprolactam, N-vinyl-3,5-dimethyl-2-caprolactam, N-vinyl-4,6-dimethyl-2-caprolactam and N-vinyl-3,5,7-trimethyl-2-caprolactam; N-vinylamides such as N-vinylformamide, N-vinyl-N-methylformamide, N-vinyl-N-ethylformamide, N-vinylacetamide, N-vinyl-N-methylacetamide, N-vinyl-N-ethylacetamide and N-vinylphthalimide. Among the above-indicated hydrophilic monomers, acrylamide-based monomers such as acrylamide, N,N-dimethylacrylamide (DMAA), N,N-diethylacrylamide, N,N-dimethylaminopropylacrylamide, N-isopropylacrylamide and acryloylmorpholine and nitrogen-containing compounds such as N-vinylpyrrolidone (NVP) are particularly preferably used.

In addition, the crosslinking agent is used as necessary in order to improve the mechanical strength of the ophthalmic lens and to make the ophthalmic lens maintain its shape with a higher degree of stability, for example. For instance, in the case where the hydrophobic monomer used for the lens has a multiplicity of polymerizable groups in a molecule, use of the crosslinking agent is not usually required. On the other hand, in the case where the number of the polymerizable group in the hydrophobic monomer used for the lens is relatively small, and in the case where an amount of use of the above-indicated hydrophobic monomer is relatively small, there is a risk that the contact lens has problems in terms of its shape stability, strength, durability, for example, so that it is preferable to use a suitable crosslinking agent.

It is possible to use any of various known crosslinking agents which have at least two polymerizable groups and which are conventionally used for the ophthalmic lens. Examples of the crosslinking agent include: (meth)acrylates of polyhydric alcohols such as ethylene glycol, diethylene glycol, triethylene glycol, tetraethylene glycol, propylene glycol, dipropylene glycol, 1,4-butanediol, 1,6-hexanediol, trimethylol propane and pentaerythritol; divinyl adipate; diallyl adipate; allyl ester vinyl ester adipate; divinyl sebacate; diallyl sebacate; allyl ester vinyl ester sebacate; vinyl esters and allyl esters of polybasic carboxylic acids such as oxalic acid, malonic acid, maleic acid, methylmalonic acid, succinic acid, dimethylmalonic acid, ethylmalonic acid, methylsuccinic acid, glutaric acid, dimethylsuccinic acid, isopropylmalonic acid, methylglutaric acid, methyladipic acid, pimelic acid, suberic acid, di-n-propylmalonic acid, 1,9-nonanedicarboxylic acid, 1,10-decanedicarboxylic acid, 1,3-phenylenediacetic acid, phenylsuccinic acid, benzylmalonic acid, 1,2,3-propanetricarboxylic acid, 1,3,5-pentanetricarboxylic acid and 1,2,3,4-butanetetracarboxylic acid. In view of the solubility, it is more preferable that all carboxyl groups in each of the polybasic carboxylic acids described above are esterified (completely esterified). Examples of the crosslinking agent further include: divinyl benzene; triallyl cyanurate; triallyl isocyanurate; diethylene glycol bisallyl carbonate; triallyl ester of trimellitic acid; allyl ether; diallyl ether of alkylene glycol or polyalkylene glycol; divinyl ether of alkylene glycol or polyalkylene glycol; allyl ether vinyl ether of alkylene glycol or polyalkylene glycol; diallylidene pentaerythritol; 1,3,5-trivinyl-1,3,5-trimethylcyclotrisiloxane. Furthermore, the following crosslinking agents can be also used: allyl(meth)acrylate, vinyl(meth)acrylate, 4-vinylbenzyl(meth)acrylate, 3-vinylbenzyl(meth)acrylate, (meth)acryloyloxyethyl (meth)acrylate, 2,2-bis[p-(meth)acryloyloxyphenyl]hexafluoropropane, 2,2-bis[m-(meth)acryloyloxyphenyl]hexafluoropropane, 2,2-bis[o-(meth)acryloyloxyphenyl]hexafluoropropane, 2,2-bis[p-(meth)acryloyloxyphenyl]propane, 2,2-bis[m-(meth)acryloyloxyphenyl] propane, 2,2-bis[o-(meth)acryloyloxyphenyl]propane, 1,4-bis[2-(meth)acryloyloxyhexafluoroisopropyl]benzene, 1,3-bis[2-(meth)acryloyloxyhexafluoroisopropyl]benzene, 1,2-bis[2-(meth)acryloyloxyhexafluoroisopropyl]benzene, 1,4-bis[2-(meth)acryloyloxyisopropyl]benzene, 1,3-bis[2-(meth)acryloyloxyisopropyl] benzene, 1,2-bis[2-(meth)acryloyloxyisopropyl]benzene. At least one of the above-indicated known crosslinking agents is suitably selected and used.

The crosslinking agent is preferably used in the polymerizable composition in an amount of 0.05-1 parts by weight, more preferably 0.1-0.8 parts by weight per 100 parts by weight of a total amount of the monomer components (hydrophobic monomer and hydrophilic monomer) described above. In the case where the crosslinking agent is required and the amount of its use is excessively small, the effect of the crosslinking agent cannot be sufficiently achieved, giving rise to a risk that the ophthalmic lens which has absorbed water fails to keep its shape such as a circular shape with high stability, and to have an adequate degree of elasticity, for example. On the other hand, an excessively large amount of use of the crosslinking agent results in an excessively large number of crosslinking points in a polymer, giving rise to a risk that the ophthalmic lens becomes fragile and is easily broken.

In order to produce the ophthalmic lens according to the invention, a reinforcing agent, a hydrophilicity agent and a polymerizable ultraviolet-absorbing agent can be used as necessary, in addition to the above-described hydrophobic monomers.

The reinforcing agent is used for adjusting the mechanical strength of the ophthalmic lens. For instance, in the case where the hydrophobic monomer has a multiplicity of polymerizable groups in a molecule, the hydrophobic monomer itself has a crosslinking effect, so that the ophthalmic lens having excellent resilience can be obtained by using the momomer. However, in the case where the strength of the ophthalmic lens is lowered due to the crosslinking effect of the hydrophobic monomer, it is preferable to use the reinforcing agent.

It is possible to use any of various known reinforcing agents conventionally used for the ophthalmic lens. Specific examples of the reinforcing agent include: vinyl esters and allyl esters of organic carboxylic acids such as vinyl acetate and allyl propionate; (meth)acrylate and its macromonomer; and styrene derivatives. At least one of the above-indicated known reinforcing agents is suitably selected and used.

The reinforcing agent is preferably used in the polymerizable composition in an amount of 1-20 parts by weight per 100 parts by weight of the total amount of the monomer components (hydrophobic monomer and hydrophilic monomer) described above. In the case where the reinforcing agent is used in an amount less than 1 part by weight per 100 parts by weight of the monomer components, there is a risk of failure to sufficiently achieve a reinforcing effect. On the other hand, in the case where more than 20 parts by weight of the reinforcing agent is used per 100 parts by weight of the monomer components, it is difficult to achieve a desired degree of oxygen permeability of the contact lens, and there is a risk that the contact lens cannot have a sufficiently high water content.

The hydrophilicity agent is used for giving hydrophilicity to the ophthalmic lens. It is preferable to appropriately use the hydrophilicity agent in the case where the ophthalmic lens obtained by copolymerization of the polymerizable composition including the above-described monomer components has the intended water content, but the surfaces of the ophthalmic lens do not exhibit sufficiently high hydrophilicity or wettability. The hydrophilicity agent is also preferably used in each of the cases where compatibility of polymerizable monomers with respect to each other is insufficient, the ophthalmic lens has excessively high elasticity, and the polymerizable composition has extremely high affinity with respect to materials of vessels used for polymerization of the polymerizable composition and/or formation of the ophthalmic lens.

It is possible to use any known hydrophilicity agent conventionally used for the ophthalmic lens. Examples of the hydrophilicity agent include: mono (meth)acrylates of polyhydric alcohols such as ethylene glycol, propylene glycol and 1,6-hexane diol; N-(meth)acryloyl morpholine; N-(meth)acryloyl piperidine; N-vinyl piperidone; N-vinyl-N-methyl acetamide; N-vinyl-N-ethyl acetamide; N-vinyl-N-methyl formamide; and N-methyl-α-methylene-2-pyrrolidone. At least one of the above-indicated known hydrophilicity agents is suitably selected and used.

The hydrophilicity agent is used in the polymerizable composition in an amount of 1-30 parts by weight per 100 parts by weight of the total amount of the monomer components (hydrophobic monomer and hydrophilic monomer) described above. In the case where the hydrophilicity agent is required and used in an amount less than 1 part by weight per 100 parts by weight of the monomer components, there is a risk that the hydrophilicity agent cannot sufficiently exhibit its hydrophilization effect on the ophthalmic lens to be obtained as the end product. On the other hand, in the case where more than 30 parts by weight of the hydrophilicity agent is used per 100 parts by weight of the monomer components, there is a risk of deterioration of compatibility of the monomers with respect to each other, and difficulty in achieving the desired degree of oxygen permeability.

Examples of the polymerizable ultraviolet-absorbing agent include: benzophenone-based polymerizable ultraviolet-absorbing agents such as 2-hydroxy-4-(meth)acryloyloxybenzophenone, 2-hydroxy-4-(meth)acryloyloxy-5-t-butylbenzophenone, 2-hydroxy-4-(meth)acryloyloxy-2',4'-dichlorobenzophenone and 2-hydroxy-4-(2'-hydroxy-3'-(meth)acryloyloxypropoxy)benzophenone; benzotriazole-based polymerizable ultraviolet-absorbing agents such as 2-(2'-hydroxy-5'-(meth)acryloyloxyethylphenyl)-2H-benzotriazole [HMEPBT], 2-(2'-hydroxy-5'-(meth)acryloyloxyethylphenyl)-5-chloro-2H-benzotriazole, 2-(2'-hydroxy-5'-(meth)acryloyloxypropylphenyl)-2H-benzotriazole, 2-(2'-hydroxy-5'-(meth)acryloyloxypropyl-3'-t-butylphenyl)-5-chloro-2H-benzotriazole and 2-(2'-hydroxy-5'-(2"-methacryloyloxyethoxy)-3'-t-butylphenyl)-5-methyl-2H-benzotriazole ; salicylic acid derivative-based polymerizable ultraviolet-absorbing agents such as phenyl 2-hydroxy-4-(meth)acryloyloxymethylbenzoate; and methyl 2-cyano-3-phenyl-3-(3'-(meth)acryloyloxyphenyl)propenoate. The above-indicated polymerizable ultraviolet-absorbing agents may be used alone or in combination as a mixture of two or more of them.

The polymerizable ultraviolet-absorbing agent is used in the polymerizable composition preferably in an amount not more than 3 parts by weight, and more preferably in an amount of 0.01-2 parts by weight, per 100 parts by weight of the total amount of the monomer components (hydrophobic monomer and hydrophilic monomer) described above. In the case where more than 3 parts by weight of the polymerizable ultraviolet-absorbing agent is used per 100 parts by weight of the monomer components, the mechanical strength of the ophthalmic lens to be obtained tends to be deteriorated, for example. Further, a smaller amount of use of the polymerizable ultraviolet-absorbing agent is preferred taking account of tonicity of the ultraviolet-absorbing agent.

In order to produce the ophthalmic lens by using the above-described coloring agent and the thus prepared polymerizable composition including the components described above, the polymerizable composition is copolymerized by one of various known polymerization methods.

More specifically described, examples of the polymerization method of polymerizing the polymerizable composition include: a method (heat polymerization method) in which a heat polymerization initiator is added to the polymerizable composition, and then the polymerizable composition is gradually or stepwisely heated within a range from the room temperature to about 150°C for polymerization; a method (photopolymerization method) in which a photopolymerization initiator (and photosensitizer) is added to the polymerizable composition, and then the polymerizable composition is irradiated with a suitable ray of light (ultraviolet ray, for example) for polymerization; and a combination of the heat polymerization method and the photopolymerization method. The polymerization may be conducted by a bulk polymerization process or any other known polymerization process.

As a method of forming (processing) the ophthalmic lens it is possible to employ any of various conventional methods known to those skilled in the art, such as: a mechanical processing method in which the polymerizable composition is accommodated and polymerized in a suitable polymerization mold or polymerization vessel, to obtain a lens material in the form of a bar, a block or a plate, which is formed of the polymer of the polymerizable composition, and then the ophthalmic lens material is formed into a desired shape by a machining process such as cutting or grinding; a cast molding method (molding method) in which a predetermined polymerizable monomer composition is accommodated in a molding cavity of a polymerization mold which gives the shape of the intended ophthalmic lens, and a formed article is obtained by polymerizing the above-described polymerizable components within the polymerization mold; and a combination of the molding method and the mechanical processing method, in which a mechanical finishing process is performed as necessary. Among the above-described methods, the molding method is particularly preferably used to effectively reduce the cost of production of the lens.

Examples of the heat polymerization initiator which is used in the case where the polymerizable composition is polymerized by the heat polymerization method include 2,2'-azobisisobutyronitrile, 2,2'-azobis(2,4-dimethylvaleronitrile), benzoylperoxide, tert-butyl hydroperoxide, cumene hydroperoxide, lauroyl peroxide, tert-butylperoxy hexanoate and 3,5,5-trimethylhexanoylperoxide. The above-indicated heat polymerization initiators may be used alone or in combination as a mixture of two or more of them. The heat polymerization initiator is used preferably in an amount of 0.001-2 parts by weight, and more preferably in an amount of 0.01-1 part by weight, per 100 parts by weight of the total amount of the monomer components in the polymerizable composition described above.

In the heat polymerization method, the polymerizable composition is heated to a temperature preferably within a range of 50-150°C, and more preferably within a range of 60-140°C, for a time period of preferably 10-120min, and more preferably 20-60min. It is possible to reduce a required time for the polymerization by heating the polymerizable composition to a temperature not lower than 50°C. It is possible to reduce an amount of residual monomer component by heating the polymerizable composition for not shorter than 10min. On the other hand, volatilization of the monomer components can be effectively restricted by heating the polymerizable composition to a temperature not higher than 150°C, for not longer than 120min.

Examples of the photopolymerization initiator which is used in the case where the polymerizable composition is polymerized by the photopolymerization method include: phosphine oxide-based photopolymerization initiators such as 2,4,6-trimethylbenzoyl-diphenylphosphine oxide (TPO) and bis(2,4,6-trimethylbenzoyl)phenylphosphine oxide; benzoin-based photopolymerization initiators such as methyl orthobenzoylbenzoate, methyl benzoylformate, benzoin methyl ether, benzoin ethyl ether, benzoin isopropyl ether, benzoin isobutyl ether and benzoin n-butyl ether; phenone-based photopolymerization initiators such as 2-hydroxy-2-methyl-1-phenylpropane-1-one (HMPPO), p-isopropyl-α-hydroxyisobutylphenone, p-t-butyltrichloroacetophenone, 2,2-dimethoxy-2-phenylacetophenone, α,α-dichloro-4-phenoxyacetophenone and N,N-tetraethyl-4,4-diaminobenzophenone; 1-hydroxycyclohexyl phenyl ketone; 1-phenyl-1,2-propanedione-2-(o-ethoxycarbonyl)oxime; thioxanthone-based photopolymerization initiators such as 2-chlorothioxanthone and 2-methylthioxanthone; dibenzosuberone; 2-ethylanthraquinone; benzophenone acrylate; benzophenone; and benzil. The above-indicated photopolymerization initiators may be used alone or in combination as a mixture of two or more of them. Further, the photosensitizer may be used together with the photopolymerization initiator. The photopolymerization initiator and the photosensitizer are used preferably in an amount of 0.001-2 parts by weight, and more preferably in an amount of 0.01-1 part by weight, per 100 parts by weight of the total amount of the monomer components in the polymerizable composition described above.

In the case of polymerizing the polymerizable composition by the photopolymerization method, it is necessary to select the photopolymerization initiator to be used depending on a range of the wavelength of the light with which the polymerizable composition is to be irradiated. An illumination intensity of the light is preferably set within a range of 0.1-100mW/cm². The photopolymerization method may be conducted by stepwisely irradiating the polymerizable composition with lights having respective different illumination intensities. The polymerizable composition is preferably irradiated with the light for a time period not shorter than 1min. By setting the illumination intensity and the irradiation time as described above, it is possible to sufficiently cure the polymerizable composition, while preventing deterioration of the material of the casting mold (or the polymerization vessel). It is also possible to heat the polymerizable composition simultaneously with its irradiation with the light, whereby the polymerization reaction is promoted, and a copolymer can be easily formed. Light required for the polymerization (curing) of the polymerizable composition can be transmitted through the material of the casting mold or the polymerization vessel, and the material is preferably selected from general-purpose resins such as polypropylene, polystyrene, nylon and polyester, for example.

By performing the above described polymerization method, or performing a hydration treatment to the polymer obtained through the above polymerization method, the intended ophthalmic lens is obtained. It goes without saying that a sterilizing treatment is appropriately performed on the thus obtained ophthalmic lens, so that a sufficiently high degree of safety of the ophthalmic lens with respect to a living body is secured.

Further, after formation of the ophthalmic lens by the above-described molding method or mechanical processing method, some treatments for improving surface properties of the contact lens can be performed on the contact lens in the dry state or the hydrated state, as necessary. It is effective to perform a surface treatment using a plasma gas, an ultraviolet ray, an eximer laser or an electron beam, or to perform a surface-coating treatment using a hydrophilic agent such as 2-hydroxyethyl (meth)acrylate, (meth)acrylic acid, methoxytriethylene glycol (meth)acrylate or dimethyl acrylamide, in order to make the surfaces of the contact lens hydrophilic and exhibit more excellent wettability.

### B. Production method using an ink composition including a coloring agent

In this method, an ink composition containing a coloring agent is prepared. Then a desired area of an ophthalmic lens precursor formed of a polymer including at least one polymerizable compound is colored with the prepared ink composition, whereby the intended ophthalmic lens is produced.

In the above production method, the ink composition containing the coloring agent is first prepared. It is preferable that the ink composition is prepared by adding the coloring agent to various solvents and then dissolving or dispersing the coloring agent.

In the production of the ophthalmic lens according to the invention, a solvent is used for preparing the ink composition including the predetermined coloring agent, the solvent permitting effective dissolution or dispersion of the coloring agent. Specifically, an organic solvent is used which has a vapor pressure of not higher than 760 mmHg at 80°C and also exhibits water solubility. By using the organic solvent having the vapor pressure of not higher than 760 mmHg at 80°C and the water solubility, the following effect can be achieved:
1) The volatility of the organic solvent is low, so that a change of properties of the ink composition due to passage of time or a change of the environment is prevented. This means that the ink-jet printing equipment is effectively prevented from becoming clogged, even in the case where the ink composition is used for the printing equipment a considerable time after preparation.
2) Among ophthalmic lenses, especially a water-absorptive contact lens is usually formed by preparing a polymer (a lens precursor) in a desired shape, and then performing a hydration treatment with respect to the obtained lens precursor, whereby the precursor is subjected to swelling. For example, in the case where a printing operation (coloring operation) with respect to the lens precursor involving a heating operation is performed using the ink composition according to the invention, the organic solvent with a low degree of volatility does not volatilize from the surface of the lens during the heating operation and thus greatly contributes to the permeation of the coloring agent into the lens precursor. Furthermore, when the hydration treatment is performed with respect to the lens precursor after the printing operation (coloring operation) involving the heating operation, the coloring agent stays within the lens precursor without elution. In the meantime, the organic solvent which has permeated into the lens precursor with the coloring agent is replaced by water used for the hydration treatment and is effectively discharged out of the precursor. As a result, the water-absorptive contact lens obtained by the hydration treatment is free from the organic solvent, which has a risk of giving a bad influence on the eyeball.

Examples of the organic solvent include N-methyl-2-pyrrolidone, 2-pyrrolidone, dimethyl formamide, dimethyl sulfoxide, propylene carbonate, 1, 3-dimethyl-2-imidazolidinone, triethyl phosphate, propylene glycol, glycerol, ethylene glycol, diethylene glycol, triethylene glycol, tetraethylene glycol, 1,4-butanediol, 1,5-pentanediol, 2-methyl-2,4-pentanediol and ε-caprolactam. More than one or two of the above-indicated organic solvents is/are suitably selected and used. Among the above-indicated organic solvents, N-methyl-2-pyrrolidone, 2-pyrrolidone, dimethyl formamide and dimethyl sulfoxide are preferably used, and N-methyl-2-pyrrolidone and/or 2-pyrrolidone are most preferably used.

It is noted that other ingredients used for preparing the conventional ink compositions for ophthalmic lenses can be also used in the ink composition for the ophthalmic lens according to the invention, as long as such ingredients do not disturb the effects of the invention. An example of such ingredients is a thickening agent. Furthermore, any conventionally known polymerizable coloring agents (polymerizable colorants) other than the above-indicated coloring agents can be added to the ink composition used for the ophthalmic lens according to the invention. In the case where a polymerizable coloring agent (a polymerizable colorant) is used, a polymerizable monomer can be added together.

Examples of the polymerizable monomer include hydrophilic monomers disclosed by way of example on page 15 of WO 2005/116728 A1; and pyrrolidone derivatives, N-substituted acrylamide and hydrophilic monomers disclosed by way of example on pages 15, 20-21 and 23-24 of WO 2004/063795 A1.

More specifically, examples of the polymerizable monomer used with the polymerizable coloring agent (the polymerizable colorant) include (meth)acrylamide; hydroxyalkyl (meth)acrylate such as 2-hydroxyethyl (meth)acrylate, hydroxypropyl (meth)acrylate and hydroxybutyl (meth)acrylate; (alkyl)aminoalkyl (meth)acrylate such as 2-dimethylaminoethyl (meth)acrylate and 2-butylaminoethyl (meth)acrylate; alkyleneglycol mono(meth)acrylate such as ethyleneglycol mono(meth)acrylate and propyleneglycol mono(meth)acrylate; polyalkyleneglycol mono(meth)acrylate such as polyethyleneglycol mono(meth)acrylate and polypropyleneglycol mono(meth)acrylate; ethyleneglycol allyl ether; ethyleneglycol vinyl ether; (meth)acrylic acid; aminostyrene; hydroxystyrene; vinyl acetate; glycidyl (meth)acrylate; allylglycidyl ether; vinyl propionate; N,N-dimethylacrylamide, N,N-dimethylmethacrylamide, N,N-diethylacrylamide, N,N-diethylmethacrylamide, N-(2-hydroxyethyl) methacrylamide, N-isopropyl (meth)acrylamide, N-(2-hydroxyethyl) acrylamide, acryloylmorpholine, methacryloylmorpholine; N-vinyllactam such as N-vinyl-2-pyrrolidone, N-vinyl-3-methyl-2-pyrrolidone, N-vinyl-4-methyl-2-pyrrolidone, N-vinyl-5-methyl-2-pyrrolidone, N-vinyl-6-methyl-2-pyrrolidone, N-vinyl-3-ethyl-2-pyrrol idone, N-vinyl-4,5-d imethyl-2-pyrrol idone, N-vinyl-5,5-dimethyl-2-pyrrolidone, N-vinyl-3,3,5-trimethyl-2-pyrrolidone, N-vinyl-2-piperidone, N-vinyl-3-methyl-2-piperidone, N-vinyl-4-methyl-2-piperidone, N-vinyl-5-methyl-2-piperidone, N-vinyl-6-methyl-2-piperidone, N-vinyl-6-ethyl-2-piperidone, N-vinyl-3,5-dimethyl-2-piperidone, N-vinyl-4,4-dimethyl-2-piperidone, N-vinyl-2-caprolactam, N-vinyl-3-methyl-2-caprolactam, N-vinyl-4-methyl-2-caprolactam, N-vinyl-7-methyl-2-caprolactam, N-vinyl-7-ethyl-2-caprolactam, N-vinyl-3,5-dimethyl-2-caprolactam, N-vinyl-4,6-dimethyl-2-caprolactam and N-vinyl-3,5,7-trimethyl-2-caprolactam; N-vinylamide such as N-vinylformamide, N-vinyl-N-methylformamide, N-vinyl-N-ethylformamide, N-vinylacetamide, N-vinyl-N-methylacetamide, N-vinyl-N-ethylacetamide and N-vinylphthalimide; pyrrolidone derivatives having a methylene group as the polymerizable group such as 1-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrol idone, 5-ethyl-3-methylene-2-pyrrol idone, 1-n-propyl-3-methylene-2-pyrrolidone, 1-n-propyl-5-methylene-2-pyrrolidone, 1-i-propyl-3-methylene-2-pyrrolidone, 1-i-propyl-5-methylene-2-pyrrolidone, 1-n-butyl-3-methylene-2-pyrrolidone and 1-t-butyl-3-methylene-2-pyrrolidone. It is to be understood that the expression "...(meth)acrylate" is used in the above description as a generic expression including "... acrylate" and "... methacrylate", and the expression "...(meth)acryl" is used in the above description as a generic expression including "... acryl" and "... methacryl", respectively.

However, it is preferred that the ink composition comprises only the above-described coloring agent and organic solvent. Where the ink composition consists solely of the above-described coloring agent and organic solvent, and such ink composition is used for a printing operation (coloring operation) described below, with respect to a water-absorptive contact lens in particular, a residue of the ink composition on the surface of the water-absorptive contact lens can be effectively decreased.

The above-indicated ink composition can be used for various kinds of ophthalmic lenses formed by using the above-described ingredients. The above ink composition is particulary advantageously applicable to the water-absorptive contact lens.

The printing operation (coloring operation) using the above-indicated ink composition for the water-absorptive contact lens, for example, is performed advantageously according to the following steps.

First, the ink composition for the water-absorptive contact lens according to the invention is deposited on the surface of a precursor of the water-absorptive contact lens (a lens precursor) in the dried state (non-swelling state). As a method of depositing the ink composition on the surface of the lens precursor, any known method, a method in which the surface of the lens precursor is coated with a liquid ink composition, for example, can be used. Specifically, examples of the method of coating the surface of the lens precursor with the ink composition include a pad printing method, a screen printing method or a method using an ink-jet printing equipment. Among them, the method using the ink-jet printing equipment is preferred in particular, because the method facilitates printing of a desired pattern such as characters, numerals and an iris pattern (hereinafter collectively referred to as "characters"). The ink-jet printing equipment applies a liquid ink composition in the form of extremely fine droplets to the surface of the lens. Each droplet deposited on the surface forms one dot. Then, an assembly of the dots forms a desired character. Generally, a character formed by small dots assembled with a high density has a sharp contrast and a high degree of visibility. When printing of characters or any other pattern is carried out using an ink-jet printing equipment, the size of the droplets and the points of deposition of the droplets, , can be accurately controlled by a computer. The shape and the size of the character can be easily changed by changing a control program of the computer. Thus, the coating method using an ink-jet printing equipment has a great advantages of very high productivity and high stability of printing quality. Moreover, the ink-jet printing equipment provides extremely fine droplets, so that the amount of droplets is small for the area of deposition of the droplet on the lens. This permits the droplets to easily permeate into the lens precursor more quickly. Accordingly, in addition to the above-described advantages, the ink-jet printing equipment has further advantages of reduced amounts of eduction of the coloring agent onto the surface of the lens and occurrence of residues, permitting permeation of the coloring agent into the lens.

For producing the ophthalmic lens according to the invention, any known ink-jet printing equipment may be used. Typical ink-jet printing equipment is composed of a system for feeding the ink composition, and an ejecting apparatus constructed with nozzles having piezo electric elements such as piezo elements, so as to provide a mechanism in which vibration generated by applying a voltage to the piezo electric elements results in ejection of the ink composition as fine droplets from the nozzles. Any ink-jet printing equipment may be suitably used as long as desired droplets can be ejected. The ink-jet printing equipment may have a single nozzle or a plurality of nozzles.

The time required to deposit the ink composition on the surface of the lens precursor varies according to the method of bringing the ink composition into contact with the surface of the lens precursor, the printing area and the shape of the printing area. For example, in the case where an ink-jet printing equipment is used, the required time is usually from about a few seconds to about 10 minutes.

Then, a heating treatment is performed with respect to the lens precursor on which the ink composition has been deposited. This heating treatment permits the coloring agent and the solvent constituting the ink composition to effectively permeate into the lens precursor.

The above heating treatment is performed at a heating temperature of 90-130°C, preferably for a time period from about a few seconds to about one minute, more preferably for a time period of 5-30 seconds. If the heating temperature is too low or the heating time is too short, there is a risk that the effect of the heating treatment may not be enjoyed. On the other hand, if the heating temperature is too high or the heating time is too long, there is a risk that the lens precursor may be deformed or changed in properties. Meanwhile, the heating treatment can be performed according to any of the known heating methods of the contact lens.

The lens precursor subjected to the heat treatment is then subjected to a treatment for removing the solvent permeated into the lens, as necessary. However, as described above, the removal treatment is not required if the ink composition is formed by using the predetermined organic solvent.

The colored water-absorptive contact lens is thus obtained by performing the hydration treatment according to the conventional method with respect to the lens precursor treated as described above. In the case where the ink composition including the predetermined organic solvent as described above is used, the coloring agent is held within the lens precursor without elution during the hydration treatment, while the organic solvent permeated into the lens precursor with the coloring agent is replaced by water used for the hydration treatment, so that the organic solvent is effectively discharged out of the precursor.

In the ophthalmic lens obtained as described above according to the invention, the coloring agent included in the lens has a specific structure, so that elution of the coloring agent from the lens is effectively prevented.

### EXAMPLES

To further clarify the invention, there will be described some examples of experiments including Reference Examples and Comparative Examples. It is to be understood that the invention may be embodied with various changes, modifications and improvements not described above and below, which may occur to those skilled in the art.

Abbreviations used in the illustrated examples indicate respective compounds described below.
Coloring agent A: a compound represented by the above structural formula (a)
Coloring agent B: a compound represented by the above structural formula (b)
Coloring agent C: a compound represented by the above structural formula (c)
Coloring agent D: a compound represented by the above structural formula (d)
Macromonomer: a silicon-containing monomer obtained according to the method described in pages 48 and 49 of WO 2004/063795 A1, which momomer has an ethylenic unsaturated group and a polydimethylsiloxane structure via an urethane bond
TRIS: [tris(trimethylsiloxy)silyl]propyl methacrylate
2-MTA: 2-methoxyethyl acrylate
N-VP: N-vinylpyrrolidone
AMA: allyl methacrylate
DMAA: N,N-dimethyl acrylamide
N-MMP: 1-methyl-3-methylene-2-pyrrolidinone
EDMA: ethyleneglycol dimethacrylate
HMPPO: 2-hydroxy-2-methyl-1-phenylpropane-1-one

The water-absorptive contact lenses obtained in the following examples and comparative examples were evaluated with respect to autoclaving resistance and oil resistance according to the following methods.

### -Evaluation of autoclaving resistance -

A treatment of steam sterilization under pressure in physiological saline at a temperature of 121°C for 20 minutes was carried out with respect to a water-absorptive contact lens as a sample. Regarding any one of Reference Examples 1 to 6 and Comparative Examples 1 to 4, the entirety of each lens after the treatment was observed with the eyes, and evaluated according to the following evaluation standard A-1. On the other hand, regarding any one of Reference Examples 7 to 12 and Comparative Examples 5 to 8, the outer surface of each lens after the treatment was observed with the eyes, and evaluated according to the following evaluation standard B-1.

### Evaluation Standard A-1

Good: color fading is not recognized.
Poor: color fading is recognized.

### Evaluation Standard B-1

Good: visibility is good with the line of the pattern being clear.
Poor: visibility is not good with the line of the pattern being unclear.

### - Evaluation of oil resistance -

A water-absorptive contact lens as a sample was immersed in about 2 mL of eye mucus component (wax ester) at the room temperature for 24 hours. Regarding any one of Reference Examples 1 to 6 and Comparative Examples 1 to 4, the entirety of each lens after the immersion was observed with the eyes, and evaluated according to the following evaluation standard A-2. On the other hand, regarding any one of Reference Examples 7 to 12 and Comparative Examples 5 to 8, the outer surface of each lens after the immersion was observed with the eyes, and evaluated according to the following evaluation standard B-2.

### Evaluation Standard A-2

Good: color fading is not recognized.
Poor: color fading is recognized.

### Evaluation Standard B-2

Good: visibility is good with the line of the pattern being clear.
Poor: visibility is not good with the line of the pattern being unclear.

### - Reference Examples 1 to 6 and Comparative Examples 1 to 4 -

10 kinds of polymerizable composition for the contact lens were prepared according to the proportion indicated in the below Table 1. Each composition was injected into a polypropylene mold having a shape of contact lens (corresponding to the contact lens having a diameter of about 14 mm and a thickness of 0.1mm). Subsequently, photopolymerization of the polymerizable composition was performed by irradiating the mold with an ultraviolet ray for 20 minutes. After the polymerization, a polymer having a shape of the contact lens was taken out of the mold, and then the polymer was subjected to the surface treatment, in which the surface of the polymer was irradiated with a plasma (output : 50W, pressure: 100Pa) in the carbon dioxide atmosphere. The polymer after the surface treatment was then immersed into the physiological saline, whereby 10 kinds of water-absorptive contact lenses (silicone hydrogel lenses) which were entirely colored were obtained (Reference Examples 1 to 6 and Comparative Examples 1 to 4). The appearances of the obtained lenses were visually observed, and the results of the observation are indicated in below Table 1. Further, the autoclaving resistance and the oil resistance of the lenses were evaluated, and the results of the evaluation are also indicated in below Table 1.

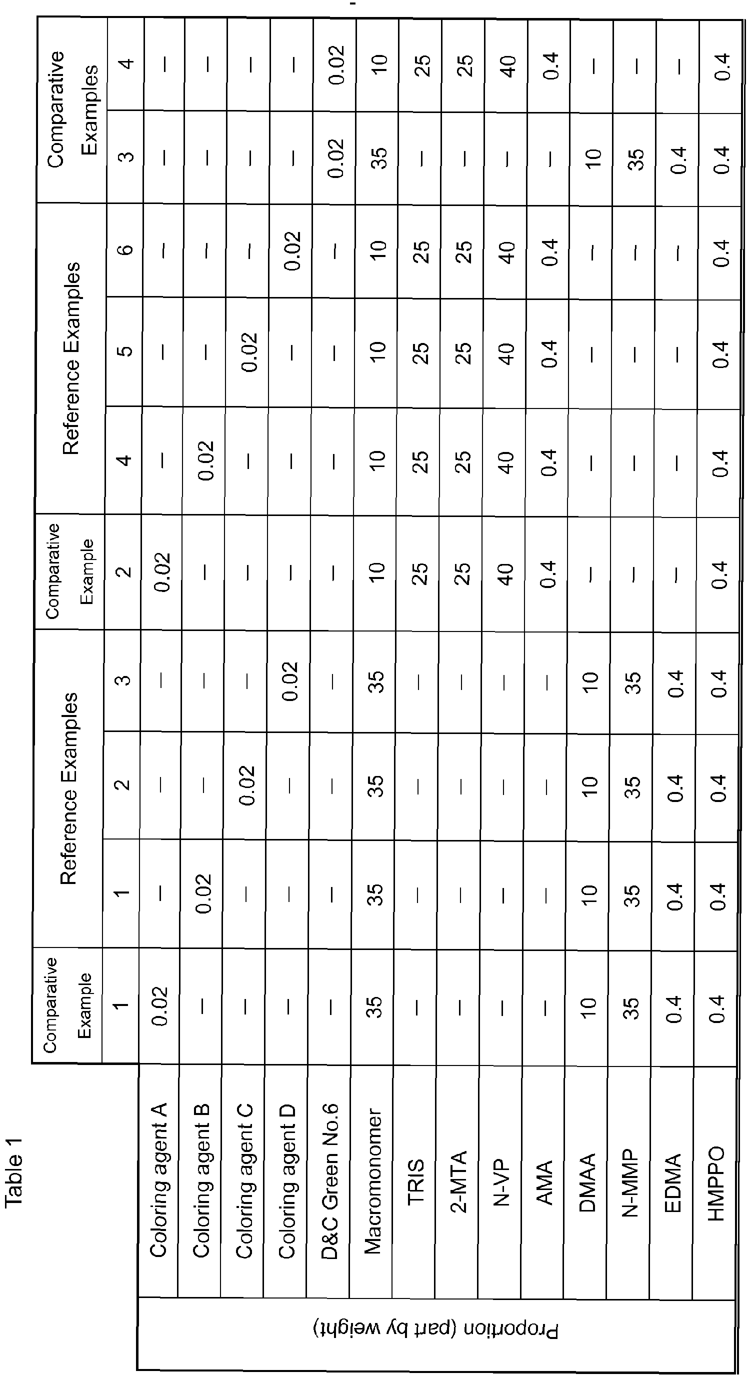

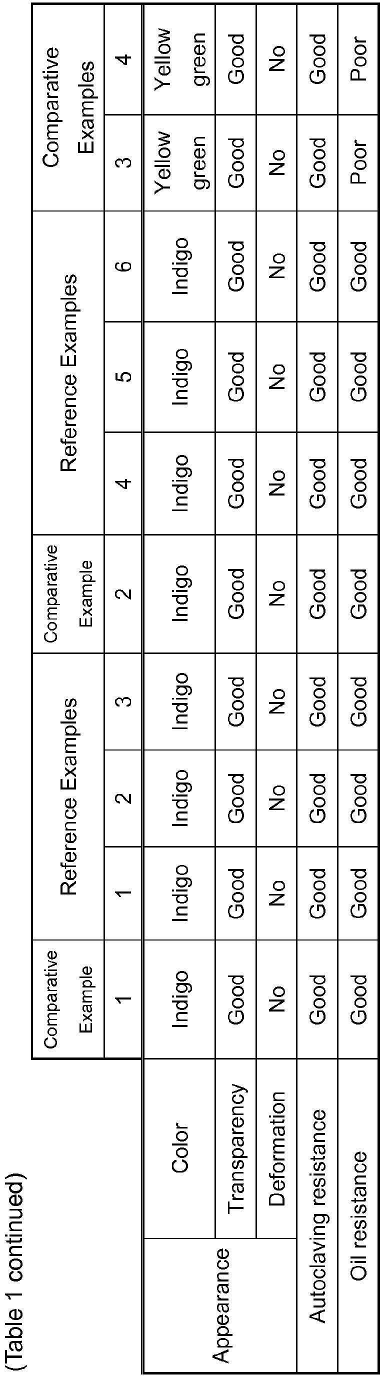

As is apparent from the results indicated in Table 1, it is recognized that the contact lens according to the invention, which is formed of a polymer of polymerizable compositions including a specific coloring agent and at least one kind of polymerizable compound, does not permit easy elution or eduction of the coloring agent out of the lens.

### - Reference Examples 7 to 12 and Comparative Examples 5 to 8 -

10 kinds of ink composition for coloring the contact lens were prepared according to the proportion indicated in the below Table 2. On the other hand, 2 kinds of polymerizable composition for the contact lens were prepared, which compositions were injected into a polypropylene mold having a shape of contact lens (corresponding to the contact lens having a diameter of about 14 mm and a thickness of 0.1mm). Subsequently, a photopolymerization of the polymerizable composition was performed irradiating the mold with an ultraviolet ray for 20 minutes, whereby the lens precursor was obtained. With respect to the combination of the ink composition and the lens precursor indicated in the below Table 2, the ink composition was deposited on (applied to) the outer surface of the lens precursor using a piezo-type ink-jet printing equipment, so as to form a predetermined pattern of dots. The lens precursor was then immersed into the physiological saline, whereby 10 kinds of water-absorptive contact lenses wherein the predetermined pattern were printed on the outer surface of the lenses were obtained (Reference Examples 7 to 12 and Comparative Examples 5 to 8). The appearances of the obtained lenses were visually observed, and the results of the observation are indicated in below Table 1. Further, the autoclaving resistance and oil resistance of the lenses were evaluated, and the results of the evaluation are also indicated in below Table 1.

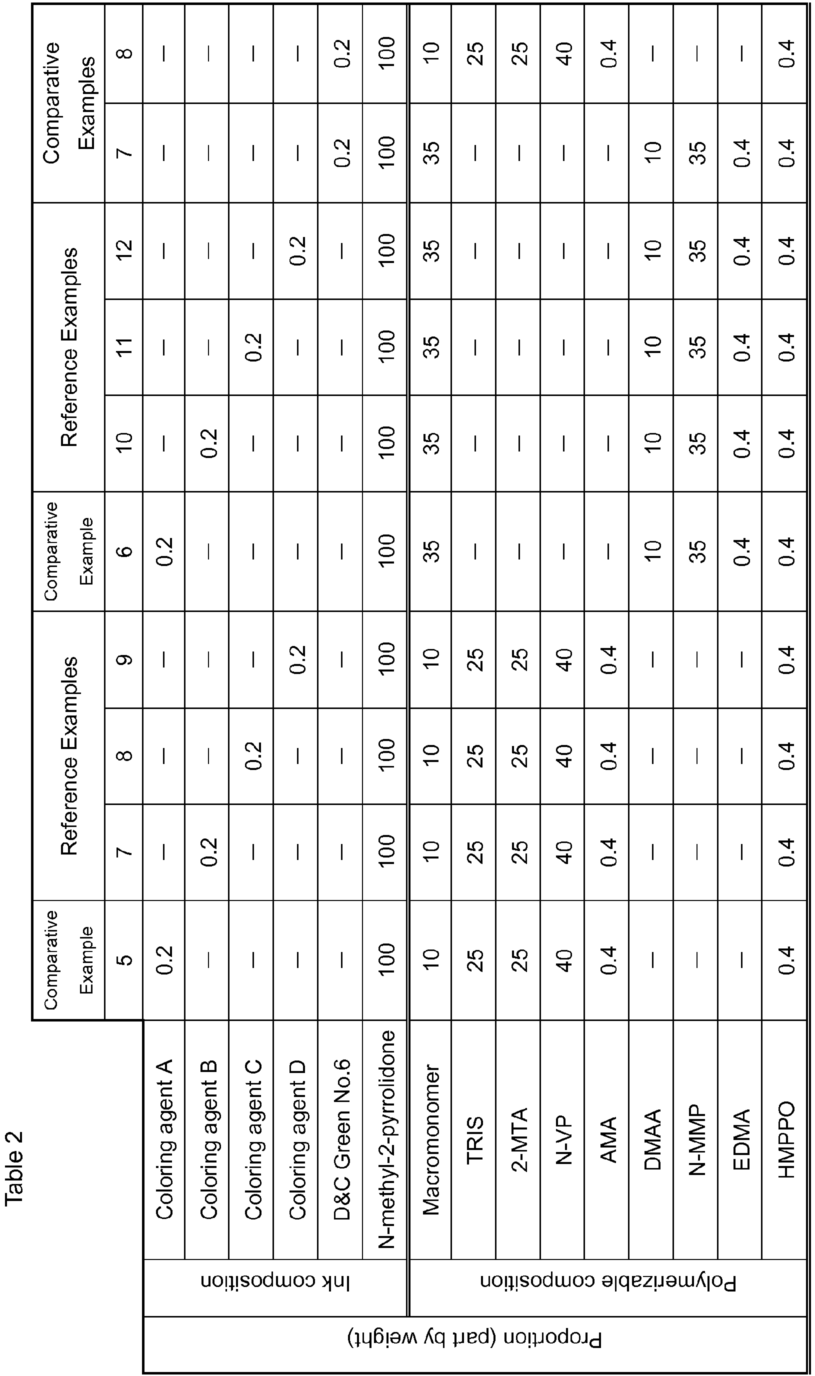

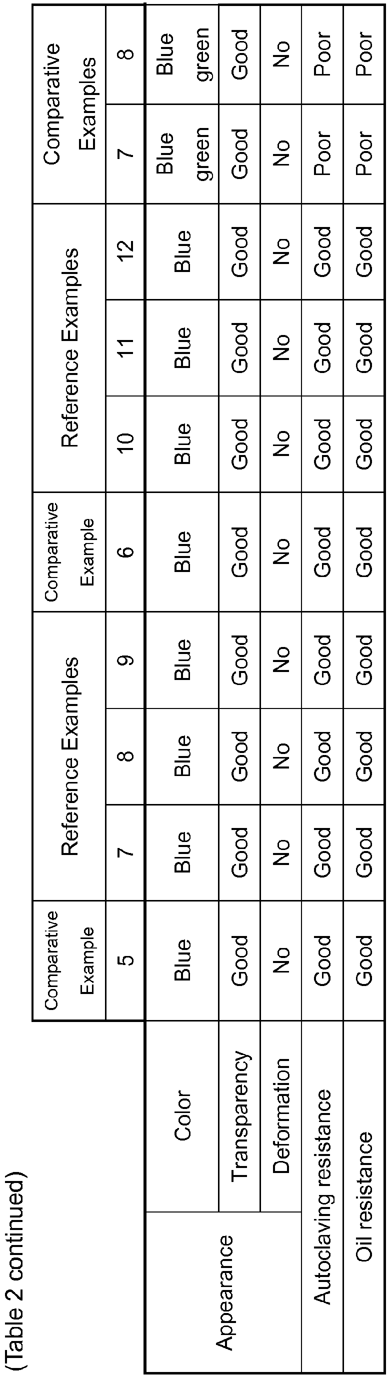

As is apparent from the results indicated in Table 2, it was recognized that the contact lens according to the invention produced by coloring the lens precursor, which is formed of the polymer of polymerizable compositions including at least one kind of polymerizable compound, with the ink composition including a specific coloring agent, does not permit easy elution or eduction of the coloring agent out of the lens.

## Claims

1. A silicone hydrogel ophthalmic lens comprising at least one of the coloring agents represented by the following structural formula (b)-(d):

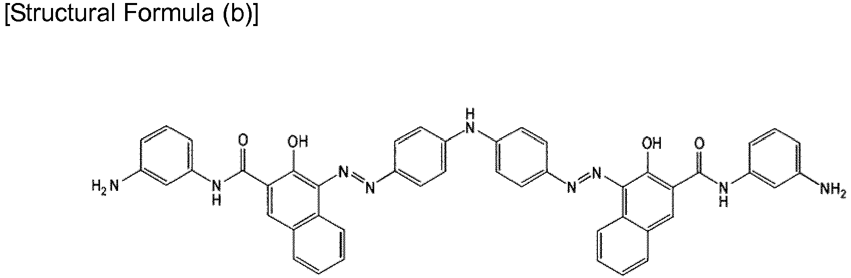

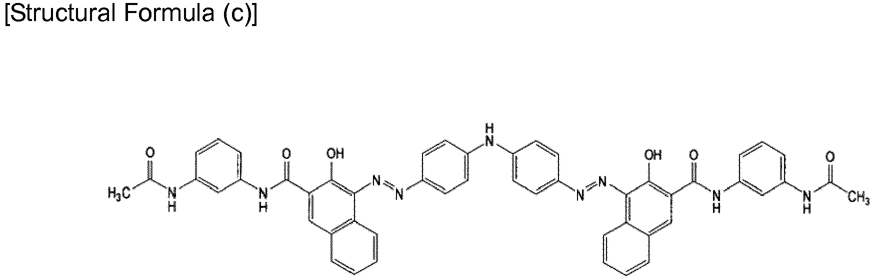

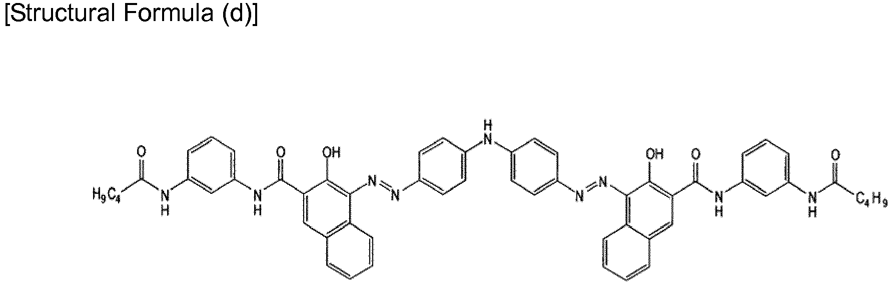

2. The silicone hydrogel ophthalmic lens according to claim 1, which is formed of a polymer of a polymerizable composition comprising the coloring agent and at least one kind of polymerizable compound.

3. The silicone hydrogel ophthalmic lens according to claim 1 or 2, comprising a pattern formed of a plurality of dots, each of the dots containing at least one of the coloring agents represented by the structural formulae (b)-(d).

4. A method of producing a silicone hydrogel ophthalmic lens comprising:
a step of preparing an ink composition in a liquid state containing at least one of coloring agents represented by the following structural formulae (b)-(d) and a water-soluble organic solvent having a vapor pressure of not higher than 760 mmHg at 80°C; 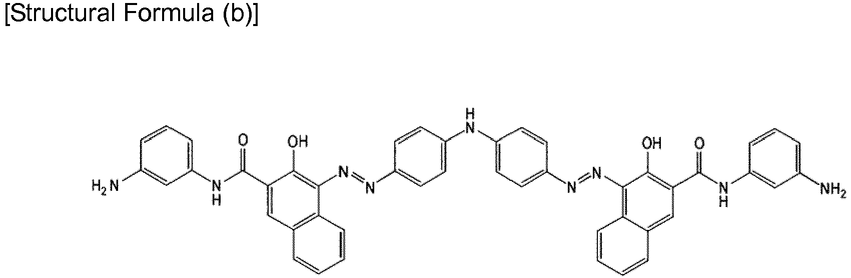 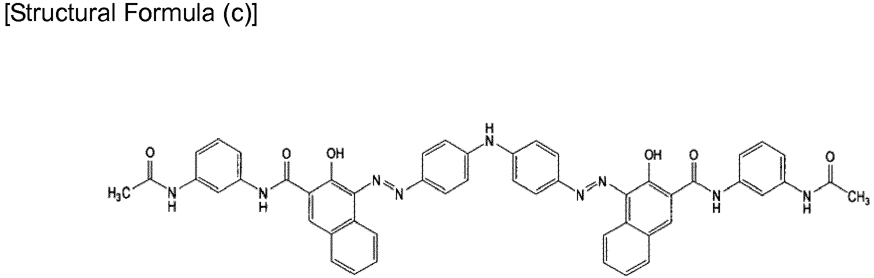 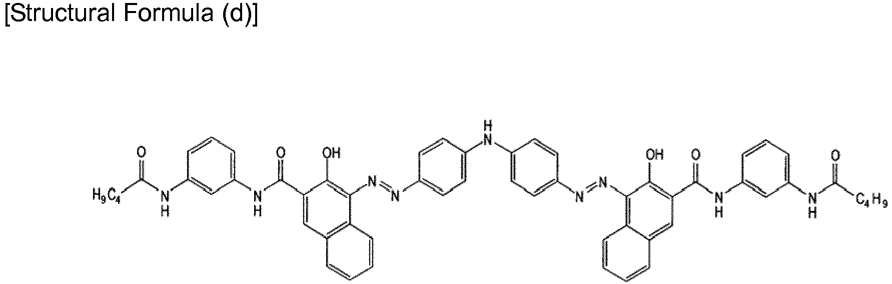
a step of preparing a precursor of the silicone hydrogel ophthalmic lens in a dried state formed of a polymer of a polymerizable composition comprising at least one kind of polymerizable compound;
a step of depositing a plurality of droplets comprising the ink composition in the liquid state on a surface of the precursor of the silicone hydrogel ophthalmic lens by spraying the plurality of droplets to the surface of the precursor;
a step of forming a pattern comprising a plurality of dots which contain the at least one of the coloring agents on the surface of the precursor of the silicone hydrogel ophthalmic lens, by heating the precursor of the silicone hydrogel ophthalmic lens to which the droplets have been deposited such that the at least one of the coloring agents in the droplets permeates into the precursor of the silicone hydrogel ophthalmic lens; and
a step of performing a hydration treatment to the precursor of the silicone hydrogel ophthalmic lens having the pattern on its surface.

5. The method of producing a silicone hydrogel ophthalmic lens according to claim 4, wherein the water-soluble organic solvent comprises at least N-methyl-2-pyrrolidone.

6. The method of producing a silicone hydrogel ophthalmic lens according to claim 4 or 5, wherein the heating of the precursor of the silicone hydrogel ophthalmic lens to which the droplets are deposited is performed at a temperature of 90-130°C for 5-30 seconds.

## Patentansprüche

1. Ophthalmische Silikonhydrogel-Linse, die zumindest eines der Färbemittel der nachstehenden Strukturformeln (b) bis (d) umfasst:

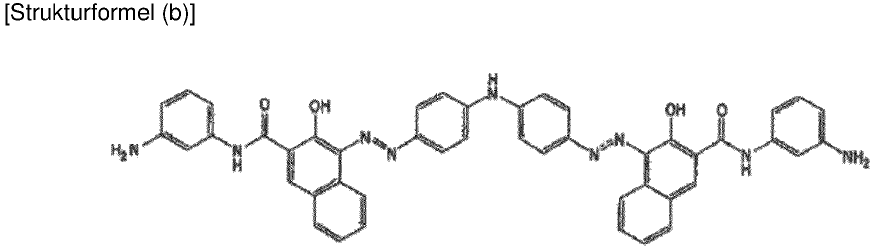

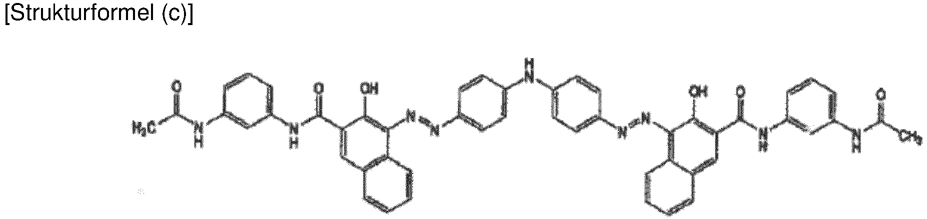

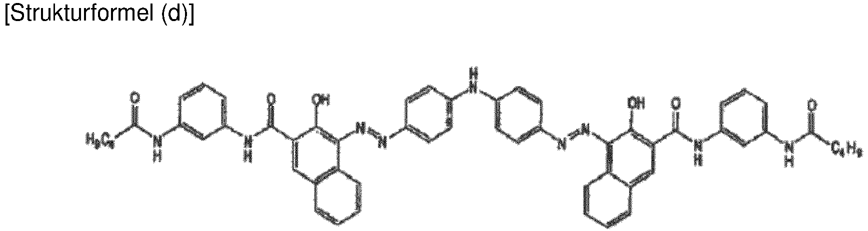

2. Ophthalmische Silikonhydrogel-Linse nach Anspruch 1, die aus einem Polymer aus einer polymerisierbaren Zusammensetzung gebildet ist, die ein Färbemittel und zumindest eine Art einer polymerisierbaren Verbindung umfasst.

3. Ophthalmische Silikonhydrogel-Linse nach Anspruch 1 oder 2, die eine aus einer Vielzahl von Punkten gebildete Struktur umfasst, wobei jeder der Punkte zumindest eines der durch die Strukturformeln (b) bis (d) dargestellten Färbemittel enthält.

4. Verfahren zur Herstellung einer ophthalmischen Silikonhydrogel-Linse, wobei das Verfahren Folgendes umfasst:
einen Schritt des Herstellens einer Farbzusammensetzung in flüssigem Zustand, die zumindest eines der Färbemittel der nachstehenden Strukturformeln (b) bis (d) und ein wasserlösliches organisches Lösungsmittel mit einem Dampfdruck bei 80 °C von nicht mehr als 760 mmHg enthält; 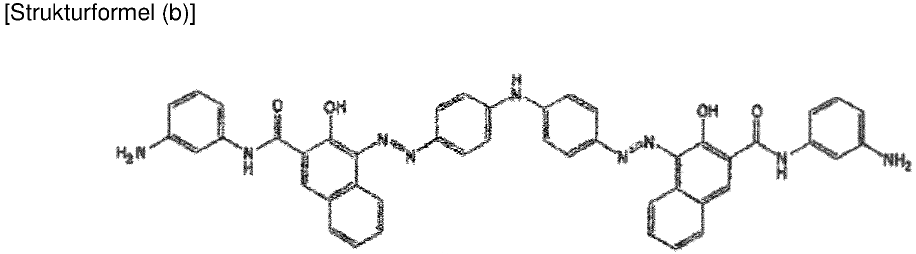 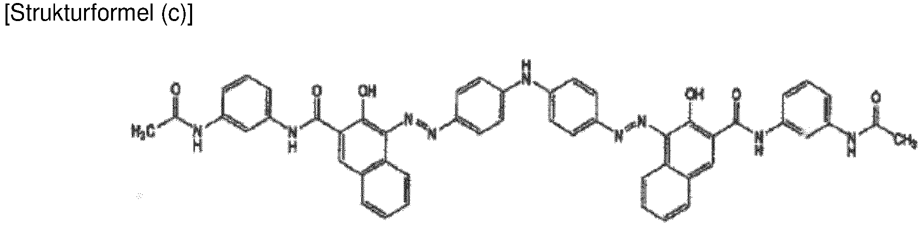 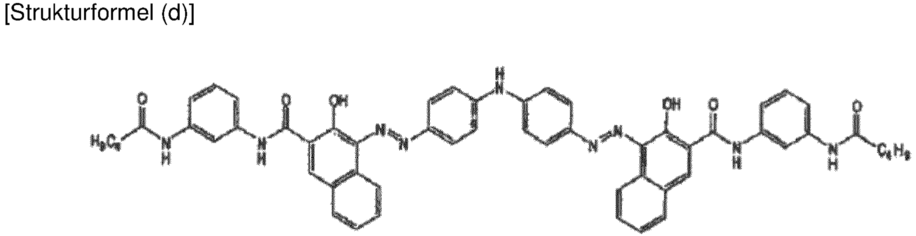
einen Schritt des Herstellens eines Vorläufers der ophthalmischen Silikonhydrogel-Linse in trockenem Zustand, der aus einem Polymer aus einer polymerisierbaren Zusammensetzung gebildet ist, die zumindest eine Art einer polymerisierbaren Verbindung umfasst;
einen Schritt des Abscheidens einer Vielzahl von die Farbzusammensetzung in flüssigem Zustand umfassenden Tröpfchen auf einer Oberfläche des Vorläufers der ophthalmischen Silikonhydrogel-Linse durch Aufsprühen der Vielzahl von Tröpfchen auf die Oberfläche des Vorläufers;
einen Schritt des Ausbildens einer Struktur, die eine Vielzahl von das zumindest eine Färbemittel enthaltenden Punkten umfasst, auf der Oberfläche des Vorläufers der ophthalmischen Silikonhydrogel-Linse durch Erhitzen des Vorläufers der ophthalmischen Silikonhydrogel-Linse, auf dem die Tröpfchen abgeschieden wurden, so dass das zumindest eine der Färbemittel in den Tröpfchen in den Vorläufer der ophthalmischen Silikonhydrogel-Linse eindringt; und
einen Schritt des Durchführens einer Hydrierungsbehandlung des Vorläufers der ophthalmischen Silikonhydrogel-Linse, der die Struktur auf seiner Oberfläche aufweist.

5. Verfahren zur Herstellung einer ophthalmischen Silikonhydrogel-Linse nach Anspruch 4, wobei das wasserlösliche organische Lösungsmittel zumindest N-Methyl-2-pyrrolidon umfasst.

6. Verfahren zur Herstellung einer ophthalmischen Silikonhydrogel-Linse nach Anspruch 4 oder 5, wobei das Erhitzen des Vorläufers der ophthalmischen Silikonhydrogel-Linse, auf dem die Tröpfchen abgeschieden sind, auf eine Temperatur von 90 °C bis 130 °C 5 bis 30 s lang durchgeführt wird.

## Revendications

1. Lentille ophtalmique en hydrogel de silicone comprenant au moins l'un des agents colorants représentés par les formules structurelles (b) à (d) suivantes :

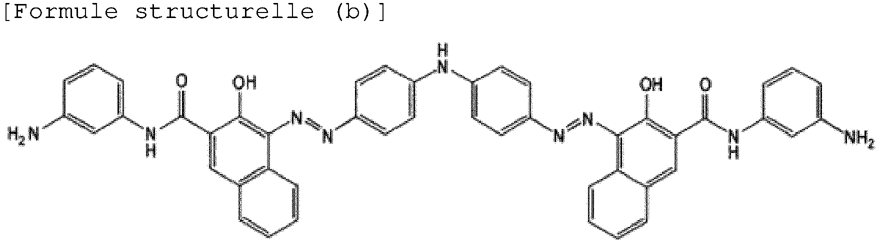

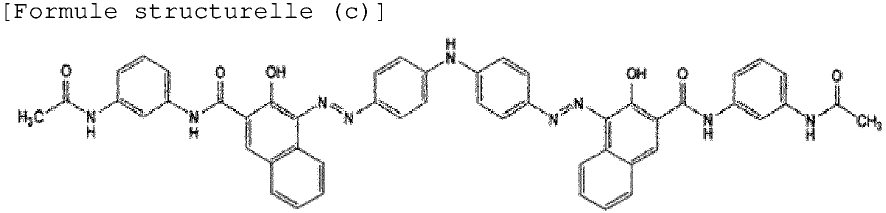

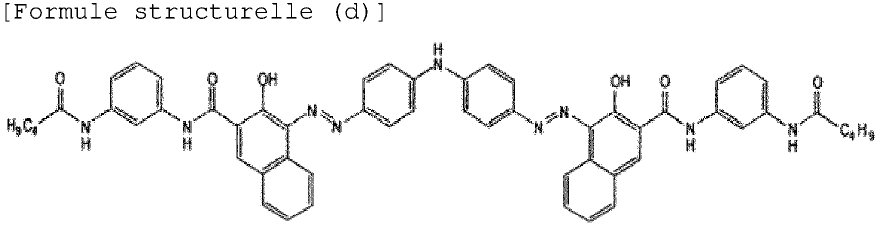

2. Lentille ophtalmique en hydrogel de silicone selon la revendication 1, qui est formée d'un polymère d'une composition polymérisable comprenant l'agent colorant et d'au moins un type de composé polymérisable.

3. Lentille ophtalmique en hydrogel de silicone selon la revendication 1 ou 2, comprenant un motif formé d'une pluralité de points, chacun des points contenant au moins un des agents colorants représentés par les formules structurelles (b) à (d).

4. Procédé de production d'une lentille ophtalmique en hydrogel de silicone comprenant :
une étape de préparation d'une composition d'encre dans un état liquide contenant au moins un d'agents colorants représentés par les formules structurelles (b) à (d) suivantes et un solvant organique soluble dans l'eau ayant une pression de vapeur non supérieure à 760 mmHg à 80 °C ; 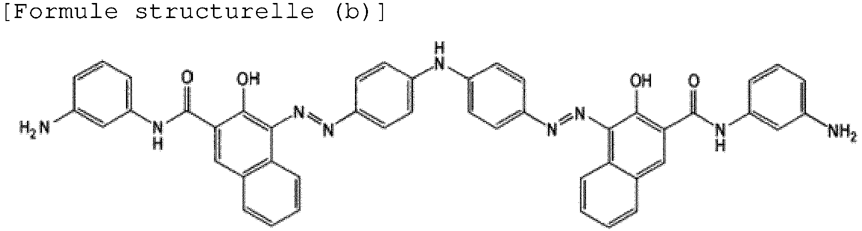 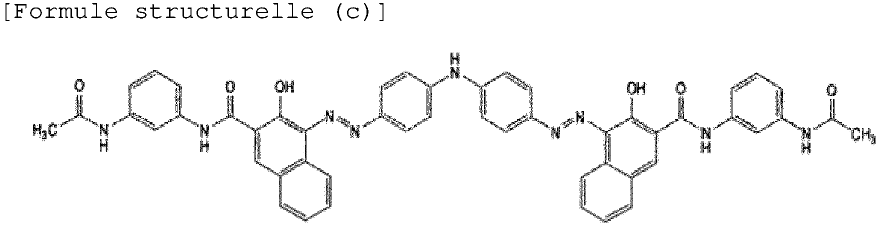 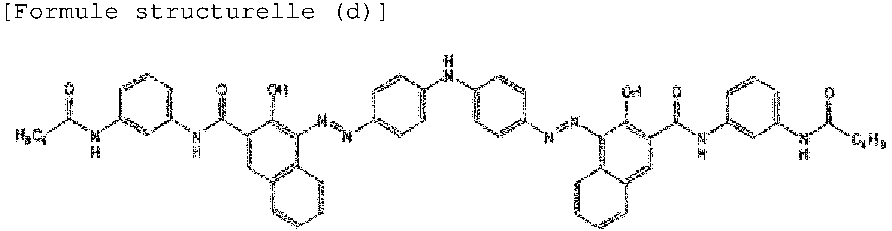
une étape de préparation d'un précurseur de la lentille ophtalmique en hydrogel de silicone dans un état séché formé d'un polymère d'une composition polymérisable comprenant au moins une sorte de composé polymérisable ;
une étape de dépôt d'une pluralité de gouttelettes comprenant la composition d'encre à l'état liquide sur une surface du précurseur de la lentille ophtalmique en hydrogel de silicone en pulvérisant la pluralité de gouttelettes sur la surface du précurseur ;
une étape de formation d'un motif comprenant une pluralité de points qui contiennent le au moins un des agents colorants à la surface du précurseur de la lentille ophtalmique en hydrogel de silicone, en chauffant le précurseur de la lentille ophtalmique en hydrogel de silicone sur laquelle les gouttelettes ont été déposées de telle sorte que le au moins l'un des agents colorants dans les gouttelettes pénètre dans le précurseur de la lentille ophtalmique en hydrogel de silicone ; et
une étape de réalisation d'un traitement d'hydratation du précurseur de la lentille ophtalmique en hydrogel de silicone ayant le motif sur sa surface.

5. Procédé de production d'une lentille ophtalmique en en hydrogel de silicone selon la revendication 4, dans lequel le solvant organique soluble dans l'eau comprend au moins de la N-méthyl-2-pyrrolidone.

6. Procédé de production d'une lentille ophtalmique en hydrogel de silicone selon la revendication 4 ou 5, dans lequel le chauffage du précurseur de la lentille ophtalmique en hydrogel de silicone sur lequel les gouttelettes ont été déposées est effectué à une température de 90 à 130°C pendant 5 à 30 secondes.
